**Europäisches Patentamt**

**European Patent Office**

**Office européen des brevets**

(19)

(11) Publication number: **0 116 746**

**A2**

(12) **EUROPEAN PATENT APPLICATION**

(21) Application number: **83306430.6**

(22) Date of filing: **24.10.83**

(51) Int. Cl.³: **G 01 N 21/41**

(30) Priority: **18.02.83 US 467943**

(43) Date of publication of application:
**29.08.84 Bulletin 84/35**

(84) Designated Contracting States:
**BE DE FR GB IT**

(71) Applicant: **American Crystal Sugar Company**
**101 North 3rd Street**
**Moorhead, Minnesota 56560(US)**

(72) Inventor: **Kysilka, James O.**
**2901 14th Avenue South**
**Moorhead Minnesota 56560(US)**

(72) Inventor: **Dahl, Randolf L.**
**Hampden**
**North Dakota 58338(US)**

(74) Representative: **Newstead, Michael John et al,**
**Haseltine Lake & Co. 28 Southampton Buildings**
**Chancery Lane**
**London, WC2A 1AT(GB)**

(54) **Apparatus and method for measuring refractive index of liquids.**

(57) A refractometer system and method for determining the refractive index of a liquid are disclosed. The refractometer system (10) includes a light source (11) for emitting light and a polarizer (14) operatively connected to intercept at least a portion of the emitted light for producing a polarizer light beam. A prism (38) having a first surface (38a) defining a plane of incidence is included. The prism (38) is operatively connected to be adapted so that a liquid (75) may be held in contact with the first surface (38a) defining a prism/liquid interface. Means of directing the polarized light beam through the prism (38) toward the prism/liquid interface is provided. A first portion of the polarized light is refracted into the liquid (75) and a second portion is reflected. A means for detection (53) is provided, whereby the refractive index of the liquid (75) to be measured can be determined. In a preferred embodiment, the detector (53) comprises means for splitting the reflected light beam into two orthogonol light beam components, means for receiving and sensing (57) and (57a) the orthogonol light beam components; and means for determining intensity of the two orthogonal light beam components.

FIG. I

APPARATUS AND METHOD FOR MEASURING

REFRACTIVE INDEX OF LIQUIDS


Background of the Invention

Field of the Invention

This invention relates generally to an apparatus and method for measuring the refractive index of a liquid. More particularly, this invention relates to a refractometer and method for measuring the refractive index of a liquid using polarized light that is reflected off of a prism/liquid interface.

Description of the Prior Art

A refractive index of a material relates to the optical density of that material. In many materials, the refractive index correlates with mass density or concentration of the material. For instance, it is possible to determine the percentage of sugar in water by measuring the refractive index of the solution.

The refractive index = $N = \theta_i/\theta_r$; where $\theta_i$ equals the angle of incidence and $\theta_r$ equals the angle of refraction.

A critical angle of refraction is the angle wherein a refracted ray changes to a reflected ray. The critical angle of refraction $\theta_c$ is equal to the arc sine $N_2/N_1$; wherein $\theta_c$ is equal to the critical angle within the first material, $N_1$ is equal to the refractive index of material 1 and $N_2$ is equal to the refractive index of material 2; providing $N_2$ is less than $N_1$.

As can be seen, the concentration of a solution may be determined by either measuring the angle of refraction or measuring the change in the critical angle of refraction. Conventional reflection refractometers use the critical angle method of measurement. Reflection refractometers measure the reflected light from the surface of the prism of a known refractive index that is in contact with a liquid to be measured. This permits either transparent or highly colored liquids to be measured. Critical angle refractometers usually focus a beam of light on the surface of a prism and/or scan the beam or detector system mechanically in an attempt to locate the critical angle. The critical angle can then be related to the refractive index of the liquid. These focusing and mechanical scanning techniques present numerous possibilities for malfunction or error in the measurement of the critical angle. The scanning that the conventional reflection refractometers use require moving parts that may wear or change position. The moving parts add additional cost to the refractometer, as well as the previously mentioned possibilities of malfunction or error.

To date, there has been no known apparatus for measuring the refractive index of a liquid by measuring reflected polarized rays of light from the liquid being measured.

The present invention addresses the problems associated with the prior art devices and methods which require a refractometer to measure the critical angle which may then be correlated to a refractive index. The present invention provides a simple, accurate and inexpensive method and apparatus for measuring a polarized reflected ray to be used to determine the refractive index of the liquid being measured.

## SUMMARY OF THE INVENTION

The present invention includes an apparatus and method for determining a refractive index for a liquid. The refractometer system includes a light source for emitting light. A polarizer means is operatively connected to intercept at least a portion of the emitted light for producing a polarized light beam. A prism having a first surface defining a plane of incidence, is operatively connected to be adapted so that the liquid may be held in contact with the first surface of the prism defining a prism/liquid interface. Means for directing the polarized light beams to the prism toward the prism/liquid interface is provided. A first portion of the polarized light beam is refracted into the liquid and a second portion is refracted off of the prism/liquid interface. Also included is means for detecting the reflected portion, whereby the refractive index of the liquid being measured can be determined.

In a preferred embodiment, the detection means includes means for splitting the reflected light beam into to orthogonal light beam components; means for receiving and sensing the orthogonal light beam components; and means for determining the intensity of the two orthogonal light beam components.

In a preferred embodiment, means for determining a ratio of the intensity of one of the orthogonal light beam components to the intensity of the other orthogonal light beam component is provided.

The invention further comprises a method for determining the refractive index of a liquid. The method comprises the steps of; (a) polarizing light from a light source; (b) directing the polarized light towards a prism/liquid interface; and (c) detecting a reflected portion of the polarized light from the prism/liquid interface, whereby the refractive index of the liquid can be determined. In a preferred embodiment, the detecting step includes; (a) splitting the reflected light beam into two orthogonal light beam components; (b) means for receiving and sensing the orthogonal light beam components; and (c) means for determining the intensity of the two orthogonal components.

BRIEF DESCRIPTION OF THE DRAWING

FIGURE 1 is a top plan view of a refractometer constructed in accordance with the principals of the present invention.

FIGURE 2 is an exploded perspective view of the refractometer apparatus of FIGURE 1.

FIGURE 3 is a schemmatic diagram illustration of a refractometer apparatus constructed in accordance with the principals of the present invention.

DETAILED DESCRIPTION OF THE INVENTION

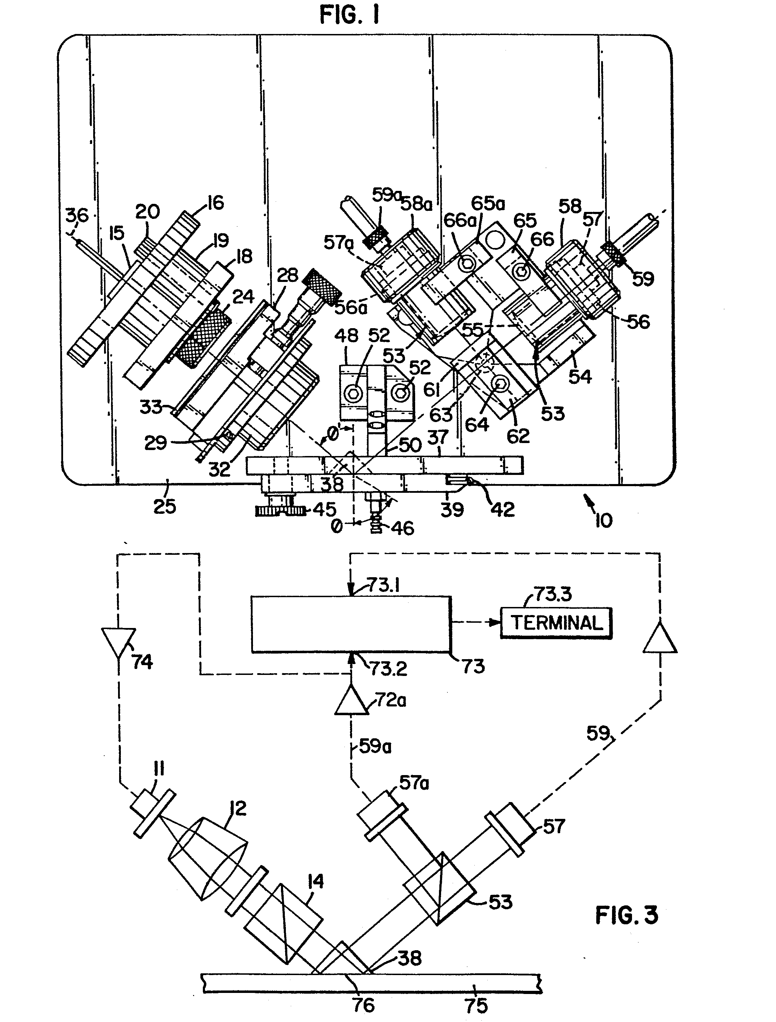

Referring to the drawing, wherein like numerals represent like parts throughout the several views, there is generally illustrated at 10 in FIGURES 1-3, a refractometer system constructed according to the principals of the present invention.

The refractometer system 10 has a light source 11 suitable for emitting light energy when energized. The light source 11 may be a light emitting diode, laser diode or other suitable light emitting source. One advantage of using a light emitting diode as the light source 11 is that a light emitting diode is very efficient, produces little heat that can effect the operation of the refractometer (as the refractive index measurement is quite temperature dependent), it is nearly a point source of light, thus providing easy collimating and is easy to electronically control the light output.

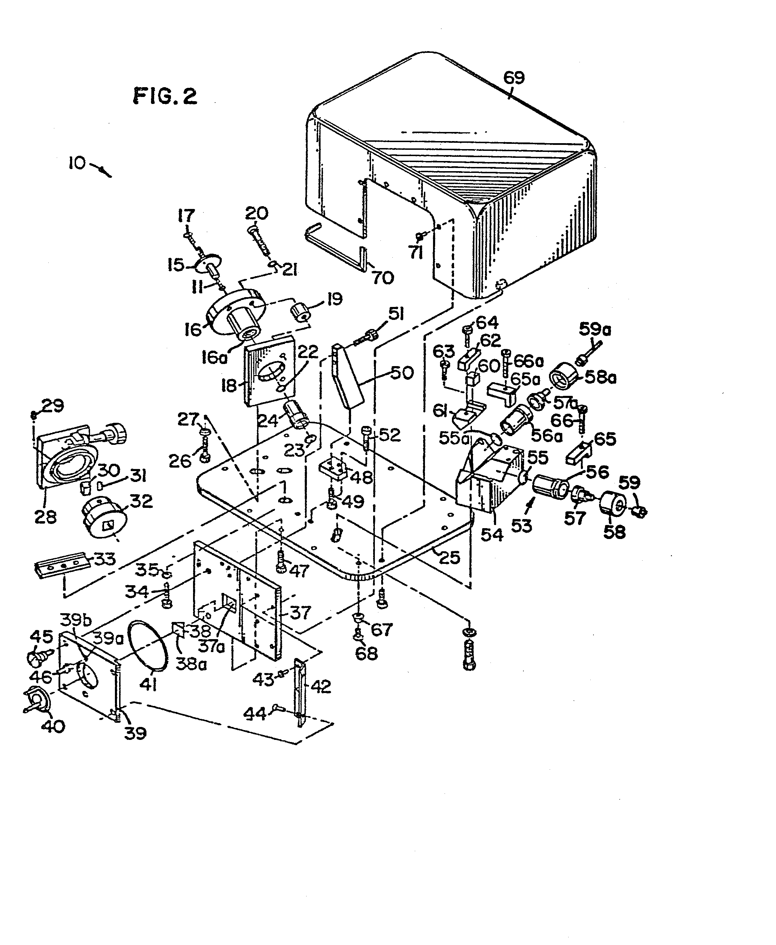

The refractometer system 10 further includes collimating optics generally designated at 12, and a polarizer 14. A band pass filter 13 may be included as illustrated in FIGURE 3 to narrow the transmitted wavelength spectrum of the light source 11, depending on the type of light source that is used. As shown in FIGURE 2, the light source 11, collimating optics 12, band pass filter 13 and polarizer 14 are positioned in optical alignment about an axis 36, such that the polarizer 14 intercepts at least a portion of the light emitted by the light source 11, to produce a polarized beam of light. It is understood that the collimating optics 12, band pass filter 13, and polarizer 14 may be any suitable apparatus well known in the industry. A preferred construction of these parts is illustrated in more detail in the exploded perspective view as shown in FIGURE 2. The light emitting diode 11 is mounted in a diode holder 15 which is mounted to a diode adjustor mount 16 by means of a screw 17. The diode adjustor mount 16 is secured to a diode adjustor base mount 18 by screw 20 and washer 21. A diode adjustor bushing is secured between the diode adjustor mount and diode adjustor base mount on the screw 17.

The collimating optics 12 includes a pair of lenses 22 and 23 and a collimating lens holder 24. In the preferred embodiment construction, the lens 22 is a DCX lens, 9mm x 11mm fl from Edmond Scientific Company, Part Number 94823 and the lens 23 is a DCX lens, 18mm x 39mm fl, Edmond Scientific Company Part Number 95247. The colminating lens holder 24 has a threaded exterior portion that threads into a threaded interior bore 16a of the diode adjustor mount 16, for mounting the lenses in coaxial alignment with the light source 11. The diode adjustor base mount 18 is secured to the base plate 25 by screw 26 and washer 27.

A polarizer 30 is secured in a polarizer lens holder 32 by a set screw 31. The polarizer lens holder 32 is mounted in a polarizer rotator 28 and secured in position by set screw 29. The polarizer rotator 28 is secured to the base plate 25 by screw 34 and washer 35. A polarizer base spacer 33 is secured in position between the base plate 25 and the polarizer rotator 28. The polarizer 30 is in coaxial alignment with the light source 11 along the axis 36. In a preferred embodiment the polarizer 30 is a Karl Lambercht Model No. MGT25A10.

A prism mounting panel 37 is secured to the base plate 25 by means of screws 47. A prism 38 is cooperatively connected in an opening 37a of the prism mounting panel 37. One method of securing the prism would be to fasten the prism 38 in place with an adhesive. The prism 38 has a·first surface 38a which comes in contact with the liquid to be measured. A prism access door 39 is secured to the prism mounting panel 37. One method of securing the prism door is to secure one edge of the hinge 42 to the prism mounting panel 37 by means of screw 43 and a second edge of the hinge 42 to the prism access door 39 by means of screws 44. An O-ring 41 is secured between the prism mounting panel 37 and prism access door 39 to provide a seal when the prism access door 39 is closed against the prism mounting panel 37. A coolant tube 40 is mounted inside an opening 39a in the prism access door 39. One method of mounting the coolant tube 40 is to secure the tube 40 with an adhesive. The prism access door 39 is secured in a closed position to the prism mounting panel 37 by means of a captive fastener 45.

A gusset base 48 is secured to the base plate 25 by means of screws 52. A gusset plate 50 is secured on one end to the gusset base 48 by means of screws 49 and at the other end to the prism mounting panel 37 by means of screws 51.

The prism access door 39 has a port 39b into which a hose barb 46 is operatively connected. The port 39b is in fluid communication with the opening 39a for purposes that will be more fully described hereinafter.

A detector, generally designated at 53, is aligned to receive a reflected portion of the polarized light beam, as will be more fully described hereinafter. The detector 53 includes a beam splitting prism 60 that is secured to a mounting base 61 by means of a mounting clamp 62 and screw 64. The mounting base 61 is in turn secured to a detector mounting base 54 which is mounted to the base plate 25 by screws 63. A first detector includes a detector lens 55 mounted in a detector lens housing 56. A photo diode detector 57 is mounted in a detector mount 58. The detector mount 58 is cooperatively connected to the detector lens housing 56. A coaxial cable 59 is operatively connected to the signal output photo diode detector 57. A detector mount clamp 65 and screw 66 are used to secure the detector lens housing 56 and detector mount 58 to the detector mount base 54. A second detector is comprised of individual components similar to the first detector and is likewise mounted to the detector mount 54. The individual components have been designated with the additional prefix "a". The second detector includes a detector lens 55a, detector lens housing 56a, photo diode detector 57a, detector mount 58a, coaxial cable 59a, detector mount clamp 65a and screw 66a. It is of course understood that the photo diode detectors 57 and 57a may be photo-transistors, or photo-multipliers or other suitable light detectors.

The signal output from the photo diode 57 is carried by means of the coaxial cable 59 to an amplifier 72. The signal output of amplifier 72 is operatively connected to a first input terminal, generally designated at 73.1, of a computer 73. Similarly, the signal output of photo diode detector 57a is carried by means of a coaxial cable 59a to an amplifier 72a. The signal output of amplifier 72a is operatively connected to a second input terminal 73.2 of the computer 73 and also by means of a feedback intensity control amplifier 74 to the light source 11, for controlling illumination power input to the light source 11.

Rubber feet 67 may be secured to the bottom surface of the base plate 25 by means of screws 68 to provide a resilient support for the base plate 25. An anodized aluminum cover 69 is secured to the base plate 25 by means of screws 71. A cover gasket 70, is secured to the edges of the cover 69 to provide for a fluid-tight seal along the base plate 25 and an opening in the cover 69 for the prism mounting panel 37.

In operation, a liquid 75 to be measured flows through the hose barb 46. The liquid 75 flows from the hose barb 46 to the opening 39a of the prism access door 39. This places the liquid 75 in contact with the first surface 38a of the prism 38. The liquid 75 and the prism 38 form a prism/liquid interface, generally referred to as 76. It is understood that the above-described embodiment allows for a continual flow through of liquid 75. It is understood that the refractometer system 10 could easily be modified to test single samples of liquids. Light emitted from the light source 11 is projected along the axis 36 through the collimating optics 12 and band pass filter 13 to the polarizer 14. The polarized beam from the polarizer 14 is directed toward the prism/liquid interface 76. The polarizer 14 is adjusted such that the polarized beam leaving the polarizer 14 is 45° to the plane of incidence of the prism 38 and the plane of incidence of the beam splitting prism 60. This 45° beam can conveniently be thought of as made up of two superimposed rays of linerally polarized light having equal strength. One of the rays is polarized with its electric field vector parallel to the plane of incidence, and is called the P polarized ray. The other ray is polarized with its electric field vector orthogonal to the plane of incidence, and is called the S polarized ray. The polarized beam of light enters the prism 38, which is preferably a sapphire prism, that has a refractive index of $N_1$. The polarized beam strikes the reflecting surface of the prism 38 at an angle $\theta_1$. $\theta_1$ is mechanically adjusted such that the working range of the instrument is less than the critical angle of the liquid being measured. A portion of the polarized beam of light is refracted into the liquid 75 at an angle $\theta$ and is lost. Therefore, $\theta$ is not measured directly. The remaining portion of the polarized beam that is not refracted into a liquid 75 is reflected off of the prism/ liquid interface 76 at the same angle as $\theta_1$ and passes through to the detector 53. In the detector 53, the polarized beam strikes the beam splitting prism 60 where the S and P polarized rays are separated and directed to the photo diode detectors 57 and 57a. The photo diode 57 and 57a are respectively energized by the P and S polarized rays and produce electrical output signals proportional to the respective illumination energy levels of the S and P rays. The electrical output signals can be processed by appropriate electrical or electronic apparatus to extract information therefrom, to determine the refractive index, as will be more fully described hereinafter. In the preferred embodiment, such electrical/electronic apparatus is generally referred to as the computer 73; however it will be understood that other appropriate electrical or electronic apparatus for performing the desired "information extraction" functions could be used. In the preferred embodiment, the computer 73, is preprogrammed to contain the values of the refractive index $N_1$ and the angle of incidence $\theta_1$, and can calculate the ratio of the S ray to the P ray from the signals received from the photo diode detectors 57 and 57a. This ratio of S/P is equal to ratio (R). In the preferred embodiment, the computer 73 is programmed or programmable to calculate the angle of the refracted light $\theta$ by using the formula: Tan $\theta = 1/\text{Tan } \theta_1 \ (R+1/R-1)$. The refractive index (N) of the liquid 75 being measured can also be readily determined by use of the computer 73 by using the formula $N = N_1 \ (\text{sine } \theta_1/\text{sine } \theta)$.

It is understood that the polarized light beam may strike the plane of incidence at other than a 45° angle with appropriate modifications being made in the calculation of $\theta$ and N.

The refractometer 10 may be calibrated by using a series of samples of known refractive indexes across the range of the instrument and allowing the computer to interplate a smooth curve through all points. The computer may also contain the software for zero adjustment, span adjustment and conversion to other engineering units.

The post-detection, analytical portion of the apparatus, above referred to as the computer 73, may use either analog or digital disciplines to perform the data analysis or calculations. In a preferred embodiment of the invention, the post-detection analytical circuitry generally comprises a digital electronic, microprocessor-controlled computation system suitable for converting the analog signals received at its input ports 73.1 and 73.2 into digital signals and for digitally processing those signals under program control to perform the desired calculations and signal manipulation functions. In the preferred embodiement, the "computer" 73 generally includes a power supply (not illustrated), computation electronics and a digital read-out display and key board terminal (generally illustrated at 73.3). In the preferred emobidment, the computer unit 73 supplies all of electrical power for the optics unit as well as for the computation and display functions. The computer includes standard microprocessor components such as a central processing unit, memory banks, analog to digital (A/D) converters, etc. well-known to those skilled in the art. In the preferred embodiment, a 16 bit microprocessor is used to perform the computation and linearization necessary to convert the photo detector readings into the desired refractive index or other engineering unit information such as refractive index, Brix, sample temperature or other units such as °Baume'. In the preferred embodiment, the operating program is stored in programmable read only memory (PROM), and all other processing information including operator interface information and calibration data, is stored in battery-backed random access memory (RAM). Typical operator interface functions include "zero", "respan", "recalibrate", and numerous "diagnostic" functions. In the preferred embodiment, the diagnostic and special operator functions are self-promoting and are presented on the same 20 character alpha-numeric output display (73.3) which is used to display sample readout information. The details of such microprocessor-controlled data processing systems are not presented herein, since those skilled in the art can readily construct and assemble appropriate circuitry and programs for use therewith to achieve the desired signal processing and calculation functions.

The use of a highly efficient LED light source 11 and remote mounting of the power supply minimize sample compartment heating. The coolant tube 40 may also be used to stabilize the temperature of the liquid 75 being measured.

It will be readily apparent to those skilled in the art that many alternative circuits, configurations and analysis arrangements may be envisioned within the spirit and scope of this invention.

In addition, a light source illumination intensity control is provided. The S beam amplified signal from the amplifier 72a is continually amplified by means of the feedback intensity control amplifier 74 which assures a constant amount of light to the S beam photo detector diode 57a. This intensity control feedback arrangement provides stability to the instrument and corrects for possible reading errors due to buildup of light absorbing material on the prism surfaces or bubbles in the liquid.

It is also understood, that by appropriate formula changes, the refractive index could be determined from the ratio of P ray to the S ray, the S ray minus the P ray, or the P ray minus the S ray.

Another advantage of the present refractometer system is that the intensity profile of most light sources are Gaussian across the beam cross-section. This tends to make critical angle reflection instruments non-linear and reflects their accuracy. The present refractometer 10 continually monitors the total beam cross-section and is not affected by this.

Further, there are no moving parts in the optic and optic detection sections of the refractometer system, thereby eliminating the inaccuracies that develop with conventional reflection refractometers and their scanning methods.

Other modifications of the invention will be apparent to those skilled in the art in light of the foregoing description. This description is intended to provide specific examples of individual embodiments which clearly disclose the present invention. Accordingly, the invention is not limited to those embodiments or to the use of elements having specific configurations and shapes as presented herein. All alternative modifications and variations of the present invention which follows in the spirit and broad scope of the appended claims are included.

CLAIMS:

1.    A refractometer system for determining a refractive index for a liquid, said refractometer system comprising:

(a)  a light source for emitting light;

(b)   polarizer means operatively connected to intercept at least a portion of said emitted light for producing a polarized light beam;

(c)   a prism having a first surface defining a plane of incidence, said prism operatively connected to be adapted so that the liquid may be held in contact with said first surface defining a prism/liquid interface;

(d)   means of directing said polarized light beam through said prism toward said prism/liquid interface, a first portion of said polarized light being refracted into the liquid and a second portion being reflected; and

(e)   means for detecting said reflected portion, whereby the refractive index of the liquid can be determined.

2.    The refractometer system of Claim 1, further comprising collimating optic means operatively connected between said light source and said prism for collimating at least a portion of said light beam.

3.    The refractometer system of Claim 1, wherein said light source is a light emitting diode.

4.    The refractometer system of Claim 1, further comprising a band pass filter operatively connected between said light source and said polarizer means to intercept at least a portion of said light beam for passing only a predetermined wave length of light to said polarizer means.

5.    The refractometer system of Claim 1, further comprising means to vary the intensity of said light source in response to the amount of said reflected light beam.

6. The refractometer system of Claim 1, wherein said detection means comprises:

(a) means for splitting said reflected light beam into two orthogonal light beam components;

(b) means for receiving and sensing said orthogonal light beam components; and

(c) means for determining intensity of said two orthogonal light beam comonents.

7. The refractometer system of claim 6, further comprising means for determining a ratio of the intensity of one of said orthogonal light beam components to the intensity of the other of said orthogonal light beam components.

8. The refractometer system of Claim 1, wherein said polarizer means is adjusted such that said polarized light beam leaving said polarizer means is at a 45° angle to said plane of incidence.

9. The refractometer system of claim 1, further comprising a power supply operatively connected to said light source and said power supply remotely located from said light source.

10. A refractometer system for determining a refractive index for a liquid, said refractometer system comprising:

(a) a light source for emitting light;

(b) polarizer means operatively connected to intercept at least a portion of said emitted light for producing a polarized light beam;

(c) a prism having a first surface defining a plane of incidence, said prism operatively connected to be adapted so that the liquid may be held in contact with said first surface defining a prism/liquid interface;

(d) collimating optic means operatively connected between said light source and said prism for collimating at least a portion of said light beam;

(e)   a band pass filter operatively connected between said light source and said polarizer means to intercept at least a portion of said light beam for passing only a predetermined wave length of light to said polarizer means;

(f)   means of directing said polarized light beam through said prism toward said prism/liquid interface, a first portion of said polarized light being refracted into the liquid and a second portion being reflected; and

(g)   means for detecting said reflected portion, said detection means comprising:

(i)   means for splitting said reflected light beam into two orthogonal light beam components;

(ii)   means for receiving and sensing said orthogonal light beam components; and

(iii)   means for determining intensity of said two orthogonal light beam comonents.

(iv)   means for determining a ratio of the intensity of one of said orthogonal light beam components to the intensity of the other of said orthogonal light beam components, whereby the refractive index of the liquid can be determined.

11.   A method for determining the refractive index of a liquid comprising:

(a)   polarizing light from a light source;

(b)   directing the polarized light toward a prism/ liquid interface; and

(c)   detecting a reflected portion of the polarized light from the prism/liquid interface, whereby the refractive index of the liquid can be determined.

12.   The method of Claim 11, wherein the detecting step includes:

0116746

-16-

(a)  splitting the reflected light beam into two orthogonal light beam components;

(b)  means for receiving and sensing the orthogonal light beam components; and

(c)  means for determining intensity of the two orthogonal components.

13.  The method of claim 12, further comprising the step of determining a ratio of the intensity of one of the orthogonal light beam components to the intensity of the other of the orthogonal light beam components.

**FIG. 1**

**FIG.3**

0116746

FIG.2

10

69

17
20
15
21
11
16
19
16a
18
22
24
23
51
50
52
48
49
29
27
26
28
30
31
32
33
35
34
47
39b
45
39a
38
37
37a
46
38a
40
41
39
43
42
44
70
71
64
62
63
60
66a
65a
59a
58a
61
55a
56a
57a
66b
55
56
65
59
54
53
57
58
25
67
68